**Europäisches Patentamt**

**European Patent Office**

**Office européen des brevets**

(11) Veröffentlichungsnummer: **0 486 905 A1**

# EUROPÄISCHE PATENTANMELDUNG

(21) Anmeldenummer: **91119109.6**

(22) Anmeldetag: **09.11.91**

(51) Int. Cl.5: **D21D 5/02**, B01D 29/11, B01D 29/52, B01D 29/86

(30) Priorität: **22.11.90 DE 4037042**

(43) Veröffentlichungstag der Anmeldung: **27.05.92 Patentblatt 92/22**

(84) Benannte Vertragsstaaten: **AT BE CH DE DK ES FR GB IT LI NL SE**

(71) Anmelder: **J.M. Voith GmbH**
**Sankt Pöltener Strasse 43**
**W-7920 Heidenheim(DE)**

(72) Erfinder: **Rienecker, Reimund**
**Kleiststrasse 9**
**W-7920 Heidenheim(DE)**
Erfinder: **Schweiss, Peter**
**Hindenburgstrasse 40**
**W-7907 Langenau(DE)**
Erfinder: **Bähr, Theodor**
**Mühlestrasse 6**
**W-7920 Heidenheim(DE)**

(74) Vertreter: **Weitzel, Wolfgang, Dr.-Ing.**
**Friedenstrasse 10**
**W-7920 Heidenheim(DE)**

(54) **Sortierer.**

(57) Die Erfindung betrifft einen Sortierer mit mindestens zwei Siebkörben in einer einzigen Gehäuseeinheit. Die Erfindung ist dadurch gekennzeichnet, daß bei Siebkorbdurchmessern von mindestens 600 mm die mindestens zwei Siebkörbe mit Abstand nebeneinander in einer Anordnung sich befinden, daß ihre Längsmittelachsen zueinander parallel verlaufen und ihre Stirnseiten oder -flächen in jeweils gleichen senkrecht zu den Längsmittelachsen der Siebkorbe liegenden Ebenen sich befinden.

Fig. 1

Die Erfindung betrifft einen Sortierer, insbesondere für Fasersuspensionen, entsprechend dem Oberbegriff des Patentanspruchs 1. Ein solcher Sortierer ist bekannt aus EP-A 36329. Bei diesem Sortierer sind in einem Gehäuse jeweils zwei Siebkorbpaare koaxial übereinander bzw. hintereinander angeordnet. Eine konzentrische Anordnung von Siebkorbpaaren hat den Nachteil, daß der Rotor für die Sortierelemente Tragarme aufweisen muß, an denen sich leicht Stoffe ansetzen können. Ferner ist auch dann die Lagerung der Siebkörbe, zumindest des inneren Siebkorbes, recht schwierig zu bewerkstelligen. Koaxial hintereinander angeordnete Siebkörbe führen zu einer relativ hohen Bauhöhe der Gehäuseeinheit und bedingen ebenfalls erhebliche Probleme hinsichtlich Montage, Konstruktion und Gießereitechnik.

Auch wenn man einen einzigen, sehr langen Siebkorb verwendet, ergibt sich der große Nachteil eines sehr hohen Gehäuses und freien Montageraums oberhalb des Gehäuses zum Montieren des Siebkorbes.

Erfindungsgemäß besteht die Aufgabe, eine Gehäuseeinheit anzugeben, bei der eine hohe Siebfläche vorliegt, ohne daß die erwähnten Nachteile auftreten.

Diese Aufgabe wird erfindungsgemäß durch die kennzeichnenden Merkmale des Patentanspruchs 1 gelöst.

Durch die erfindungsgemäße Anordnung von Siebkörben nebeneinander und nicht hintereinander, wie beim Stande der Technik, in einer Gehäuseeinheit entstehen die erwähnten konstruktiven und montagemäßigen Nachteile im wesentlichen nicht. Es können beliebig viele Siebkörbe in einer Gehäuseeinheit angeordnet sein, bevorzugt werden aber zwei, höchstens drei nebeneinander in einer Gehäuseeinheit angeordnete Siebkörbe. Vorzugsweise ist ein elliptischer Querschnitt für den Falle von zwei Siebkörben je Gehäuseeinheit verwendet. Allerdings bietet auch die Anordnung Vorteile, wo zwei an sich im Querschnitt kreiszylindrische Gehäuse verbunden sind durch Einlaßstutzen und Auslaßstutzen für Gutstoff (Siebdurchlauf). Hierbei ergeben sich aus Festigkeitsgründen die geringsten notwendigen Wandstärken für die beiden zu verschmelzenden Gehäuseteile.

Nachfolgend wird die Erfindung anhand der in den Figuren der Zeichnung dargestellten Ausführungsbeispiele erläutert. Dabei stellt

Fig. 1    eine Draufsicht und
Fig. 2    einen Querschnitt einer ersten Ausführungsform,
Fig. 3    eine perspektivische Ansicht und
Fig. 4    eine Draufsicht einer zweiten erfindungsgemäßen Ausführungsform

dar.

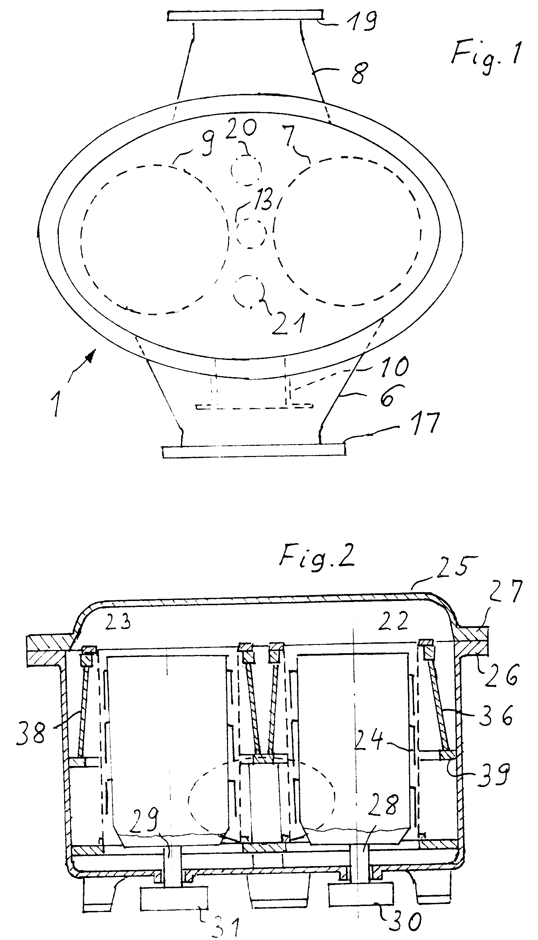

In Fig. 1 weist die Gehäuseeinheit 1 symmetrisch zu den Längsmittelachsen der strichliert dargestellten, nebeneinander angeordneten Siebkörbe 7 und 9 einander gegenüberliegend einen Einlaßstutzen 6 und einen Auslaßstutzen 8 für Gutstoff (Siebdurchlauf) auf. Die Stutzen sind mit Flanschen 17 bzw. 19 versehen, um an Rohrleitungen angeschlossen zu werden. Einlaßstutzen und Auslaßstutzen für den Siebdurchlauf befinden sich, wegen ihrer großen Durchmesser von unter Umständen mehr als 100 cm, beide am eigentlichen Gehäuse-Hauptteil, also keiner von ihnen am Deckel. Praktisch befindet sich somit die Oberkante - dem Deckel nahe Kante - der Einströmöffnung des Gehäuses in der Nähe der Oberkante des jeweiligen Siebkorbes. Bei einer Überholung der Siebkörbe und dementsprechend einem Ausbau derselben brauchen daher Rohrleitungen nicht abgebaut zu werden.

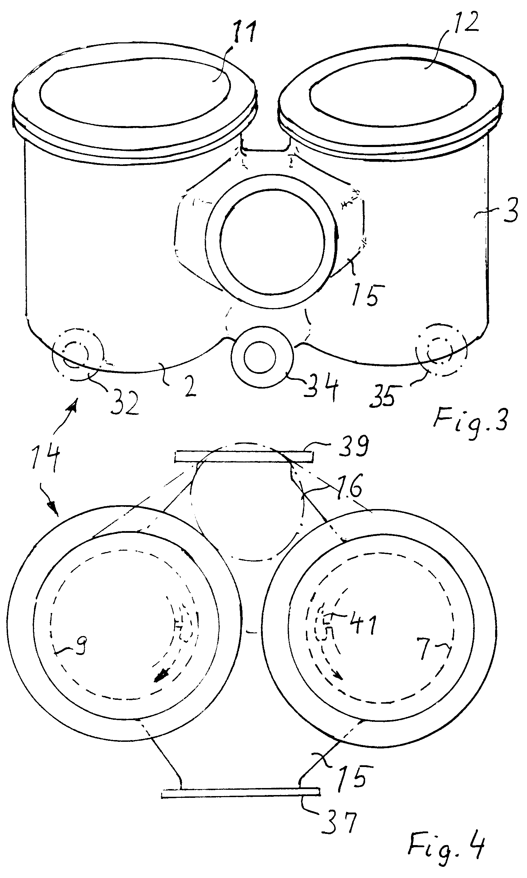

Der Einlaßstutzen 6 befindet sich natürlich näher an dem Deckel 25 als der Auslaßstutzen 8 für Gutstoff (Siebdurchlauf), wobei die Strömung am Einlaßstutzen 6 aus zunächst zum Deckel 25 hin verläuft. Sie kehrt sich dann um, und die Suspension gelangt in den Zwischenraum zwischen den Rotoren 22 und 23 und den sie umgebenden Siebkörben 7 bzw. 9. Um die Strömung zu leiten und die Einströmseite von der sich radial außerhalb der Siebkörbe befindenden Gutstoffseite zu trennen, ist eine den jeweiligen Siebkorb umgebende kegelstumpfförmige Trennwand 36 bzw. 38 vorgesehen, deren Durchmesser sich zum Deckel 25 hin stetig verringert. Dadurch nimmt der Strömungsquerschnitt zum Deckel 25 hin zu. In gleicher Weise vergrößert sich der Strömungsquerschnitt vom dem Deckel 25 nahen Ende der Siebkörbe hin zu deren Mittel- bzw. anderen Endbereich. Eine Zwischenwand 39 trennt ebenfalls - d.h. in Verbindung mit den kegelstumpfförmigen Wänden - die Einlaßseite des Gehäuses von der Gutstoffseite der Siebkörbe. Es kann im Bereich jedes Siebkorbes ein Auslaßstutzen für den Spuckstoff vorgesehen sein, jedoch ist auch nur ein einziger, entsprechender Auslaßstutzen entsprechend Fig. 3 möglich. Das Gehäuse ist mit dem Deckel 25 über entsprechende Flansche 26 und 27 verbunden. Die Rotoren 22 und 23 tragen flügelförmige Sortierelemente 24. Sie werden an Wellen 28 und 29 gehalten, die hier jeweils eine Riemenscheibe 30 und 31 zwecks Antrieb der Rotoren tragen. Es kann für jeden Rotor ein eigener Antriebsmotor vorgesehen sein, jedoch ist es auch möglich - wenn man keine Riemenscheiben verwendet - durch ein Getriebe die beiden Rotore bzw. deren Antriebswellen zu koppeln.

Man kann noch die Zwischenwand 39 durch eine Stützstrebe 13 oder noch besser durch zwei symmetrisch zur Verbindungsebene der Mittelachsen der Siebkörbe und zu den Mittelachsen angeordnete Stützstreben 20 und 21 aus Sicherheitsgründen, falls sie einmal durch große Druckdifferenzen beansprucht wird, abstützen.

Es ist günstig, wie dargestellt, nur jeweils einen
einzigen Einlaß- und Auslaß-Stutzen für Gutstoff
(Siebdurchlauf) vorzusehen, da dann die Regelung
des Durchsatzes der Gehäuseeinheit am einfachsten ist.

In Fig. 3 ist eine Ausführungsform dargestellt,
bei der zwei im wesentlichen zylindrische Gehäuse
2 und 3 durch Einlaßstutzen 15 und Auslaßstutzen
16 für Gutstoff (Siebdurchlauf) miteinander verbunden sind. Diese Stutzen erweitern sich vorzugsweise sehr stark zum Umfang der einzelnen Gehäuseteile 2, 3 hin. Dadurch ergeben sich große Eintritts-
und Austrittsquerschnitte im Bereich der Wandungen der Gehäuseteile 2 und 3. Ansonsten sieht das
Innere der Gehäuseeinheit ähnlich aus wie im Falle
von Fig. 2, was also die Siebkörbe und die Umlenkwändel usw. betrifft. Es ist ein einziger Auslaßstutzen 34 für den Spuckstoff angedeutet, jedoch
könnte auch jedes Gehäuseteil 2, 3 einen eigenen,
entsprechenden Auslaßstutzen, wie strichpunktiert
bei 32 und 35 angedeutet, aufweisen. Jeder Gehäuseteil hat einen Deckel 11 bzw. 12. Der Einlaßstutzen 15 und Auslaßstutzen 16 weisen Flansche
37 bzw. 39 zwecks Verbindung mit Rohrleitungen
auf. Es ergibt sich insgesamt eine sehr stabile
Gehäuseeinheit 14.

Die dargestellten Gehäuseeinheiten haben den
Vorteil, relativ geringe Bauhöhe zu beanspruchen.

In Figur 4 ist am Austrittsstutzen 16 noch
strichpunktiert angedeutet, daß seine Eintrittsöffnung auch nach oben gerichtet sein kann, also das
letzte Ende desselben auch gegen den Deckel 11
bzw. 12 hin bzw. nach oben gerichtet sein kann.
Man kann, wie dargestellt, dadurch den Anschnitt
des Stutzens am Gehäuseumfangs relativ weit machen, dafür aber die Höhe der Austrittsöffnung des
Auslasses für den Gutstoff relativ niedrig gestalten,
so daß insgesamt die Siebhöhe relativ klein gehalten werden kann (siehe auch Figur 2). Man kann
also die nötige Siebfläche dann mehr durch einen
größeren Siebdurchmesser als durch eine größere
Siebhöhe erreichen.

Man wird, wie in der Figur 4 noch weiter strichpunktiert angedeutet, die Drehrichtung der Rotoren
entgegengesetzt wählen. Dabei sollen vorzugsweise die die Pulsationen erzeugenden Pulsationselemente - im allgemeinen als Hydrofoils ausgebildete
Profile - des Rotors nicht, wie dort dargestellt, im
Gleichtakt umlaufen - wenn auch mit gleicher Geschwindigkeit - , sondern auf Lücke versetzt, so
daß im Annäherungsbereich zweier Pulsationselemente der Rotore dasjenige des einen Rotors mitten in der Lücke der Pulsationselemente des anderen Rotors sich im größten gegenseitigen Annäherungsbereich der Pulsationselemente der beiden Rotore befindet. Die Pulsationselemente sind mit
41 angedeutet. Diese sind zu vielen über den Umfang und die Höhe der Siebkörbe verteilt.

Die Drehrichtung der Rotore im Gegensinn ist
durch die strichlierten Pfeile in Figur 4 angedeutet.

Alle diese Ausführungen gelten auch natürlich
für die Ausführungsform mit dem elliptischen Gehäusequerschnitt nach Figur 2.

Der Antrieb der Rotore kann durch ein Getriebe
erfolgen, so daß die Rotore mit gleicher Drehgeschwindigkeit umlaufen.

Man kann jedoch auch jeweils einen eigenen
Antrieb für die Rotore vorsehen und durch eine
Regelung erreichen, daß die von den Impulselementen hervorgerufenen Impulse sich am Ende
des Austrittsstutzens 16 möglichst gering bemerkbar machen, d.h. also eine möglichst kleine Amplitude haben bzw. daß die Summe der von den
beiden Rotoren erzeugten Schwingungen eine Welligkeit mit möglichst kleiner Amplitude aufweist.

**Patentansprüche**

1.   Sortierer mit mindestens zwei Siebkörben in
     einer einzigen Gehäuseeinheit, wobei er insbesondere als ein für die Sortierung von Altpapiersuspensionen vorgesehener Drucksortierer
     ausgebildet ist, bei dem jeweils ein Rotor je
     Siebkorb (79) an diesem vorbeistreichende
     Pulsationselemente (41) trägt, dadurch gekennzeichnet, daß bei Siebkorbdurchmessern
     von mindestens 600 mm die mindestens zwei
     Siebkörbe (7, 9) mit Abstand nebeneinander in
     einer Anordnung sich befinden, daß ihre
     Längsmittelachsen zueinander parallel verlaufen und ihre Stirnseiten oder -flächen in jeweils
     gleichen senkrecht zu den Längsmittelachsen
     der Siebkörbe liegenden Ebenen sich befinden.

2.   Sortierer nach Anspruch 1, dadurch gekennzeichnet, daß Einlaß- (6, 15) und Auslaß-Stutzen (8, 16) für Gutstoff (Siebdurchlauf) symmetrisch zu den Längsmittelachsen der Siebkörbe
     (7, 9) angeordnet sind.

3.   Sortierer nach Anspruch 1 oder 2, dadurch
     gekennzeichnet, daß Einlaß- (6, 15) und
     Auslaß-Stutzen (8, 16) einander gegenüber an
     verschiedenen Seiten der Gehäuseeinheit (1,
     14) angeordnet sind.

4.   Sortierer nach einem der Ansprüche 1 bis 3,
     dadurch gekennzeichnet, daß die Gehäuseeinheit (1) einen im wesentlichen elliptischen
     Querschnitt - quer zu den Längsmittelachsen
     der Siebkörbe (7, 9) - im Falle von zwei parallelen Siebkörben aufweist.

5. Sortierer nach einem der Ansprüche 1 bis 4, dadurch gekennzeichnet, daß sich an der Gehäuseeinheit (1, 14) nur je ein einziger Einlaß- (6, 15) und Auslaß-Stutzen (8, 16) für Gutstoff (Siebdurchlauf) befinden.

6. Sortierer nach einem der Ansprüche 1 bis 5, dadurch gekennzeichnet, daß Einlaß- und Auslaß-Stutzen für Gutstoff (Siebdurchlauf) unterhalb des Gehäusedeckels (11, 12; 25) - also nicht am Deckel selbst - vorgesehen sind, wobei der Einlaßstutzen mehr in der Nähe des Deckels und der Auslaßstutzen für Gutstoff (Siebdurchlauf) weiter entfernt vom Deckel angeordnet sind.

7. Sortierer nach einem der Ansprüche 1 bis 6, dadurch gekennzeichnet, daß auch nur ein einziger Rejekt-Abzugsstutzen (10, 34) vorgesehen ist.

8. Sortierer nach Anspruch 6, dadurch gekennzeichnet, daß um den dem Deckelbereich näheren Teil der Siebkörbe eine den jeweiligen Siebkorb umgebende, kegelförmige Trag- und Sperrwand (36, 38) vorgesehen ist, die die Einströmseite der Gehäuseeinheit (1, 14) gegen die Gutstoffseite der Siebkörbe absperrt und deren Durchmesser vom Mittelbereich der Siebkörbe zum Deckel (25) hin abnimmt, so daß sich zwischen den konischen Wandungen und der Gehäusewandung ein zum Deckel (25) hin zunehmenden Strömungsquerschnitt aufweisender Kanal für die zugeführte Fasersuspension ergibt.

9. Sortierer nach Anspruch 8, dadurch gekennzeichnet, daß im Mittelbereich der Siebkörbe (7, 9) am unteren Ende der kegelförmigen Wandungen (36, 38) sich eine senkrecht zu den Längsmittelachsen der Siebkörbe erstreckende Trennwand (39) sich erstreckt, die auch die Einströmseite des Gehäuses von der Gutstoffseite der Siebkörbe absperrt.

10. Sortierer nach einem der Ansprüche 1 bis 8, dadurch gekennzeichnet, daß die Stellung der Pulsationsorgane (41) der Rotore, bezogen auf symmetrisch zu den Siebkörben (7, 9) oder Rotordrehachsen bzw. Gehäusemittelachsen angeordnetem Auslaßstutzen (8, 16) für den Gutstoff unsymmetrisch, insbesondere auf Lücke im Verhältnis zu den beiden Drehkreisen der Pulsationsorgane ist.

11. Sortierer nach einem der Ansprüche 1 bis 10, dadurch gekennzeichnet, daß sich der Auslaßstutzen (8, 16) für den Gutstoff in Richtung zum Deckel (25; 11, 12), gegebenenfalls nach oben hin erstreckt.

12. Sortierer nach einem der Ansprüche 1 bis 11, dadurch gekennzeichnet, daß der Antrieb für die beiden oder mehreren Rotore geregelt wird abhängig von Meßwerten der von den Impulselementen der Rotore erzeugten Schwingungsimpulse nach dem Auslaßstutzen für Gutstoff (bzw. am Ende desselben), so daß eine minimale Impulsamplitude der Gesamtschwingung nach dem Auslaßstutzen bzw. am Ende desselben erreicht wird.

13. Sortierer nach Anspruch 1 bis 3 und 5, dadurch gekennzeichnet, daß je ein an sich rundes, den jeweiligen von zwei nebeneinander angeordneten Siebkörben im wesentlichen einschließendes Gehäuse (2, 3) vorgesehen sind und daß die beiden Gehäuse (2, 3) im wesentlichen allein durch die mittig zu ihnen angeordneten Einlaßstutzen (15) und für Gutstoff (Siebdurchlauf) vorgesehenen Auslaßstutzen (16) - gegebenenfalls unterstützt durch einen oder zwei mittig zu den Gehäusen (2, 3) angeordnete Auslaßstutzen (34) für den Siebüberlauf - miteinander verbunden und aneinander gehalten sind.

Fig. 1

Fig. 2

*11* *12*

*3*

*15*

*32*  *2*  *34*  *35*

Fig.3

*14*

*39*

*16*

*9*  *41*  *7*

*15*

*37*

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | FR-A-2 384 889 (HERMANN FINCKH MASCHINENFABRIK) <br> * Abbildung 1 * <br> --- | 1-9 | D21D5/02 <br> B01D29/11 <br> B01D29/52 <br> B01D29/86 |
| Y | US-A-2 682 812 (W.F. MATHEWSON) <br> * Abbildungen 1,2,5,7 * <br> * Spalte 2, Zeile 16 - Spalte 3, Zeile 11 * <br> * Spalte 4, Zeile 24 - Zeile 30 * | 1-3 | |
| A | --- | 5-7 | |
| Y | FR-A-2 377 219 (GEBR. BECKER APPARATEBAU) <br> * Ansprüche 1,4-7; Abbildung 1 * <br> --- | 1,4-9 | |
| A,D | EP-A-0 036 329 (THE BLACK CLAWSON COMPANY) <br> * Abbildung 1 * <br> * Seite 2, Zeile 16 - Zeile 22 * <br> * Seite 5, Zeile 1 - Zeile 4 * <br> * Seite 8, Zeile 28 - Seite 9, Zeile 3 * <br><br> ----- | 1-3-5,10 | |
| | | | **RECHERCHIERTE SACHGEBIETE (Int. Cl.5 )** <br><br> D21D <br> B01D |

Der vorliegende Recherchenbericht wurde für alle Patentansprüche erstellt

| Recherchenort | Abschlußdatum der Recherche | Prüfer |
|---|---|---|
| DEN HAAG | 18 FEBRUAR 1992 | HAEUSLER F.U. |